(19) Europäisches Patentamt
European Patent Office
Office européen des brevets

(11) EP 4 756 958 A1

# (12) EUROPEAN PATENT APPLICATION

(43) Date of publication:
**10.06.2026 Bulletin 2026/24**

(21) Application number: **24218398.6**

(22) Date of filing: **09.12.2024**

(51) International Patent Classification (IPC):
***H01M 10/052*** *(2010.01)* ***H01M 10/0565*** *(2010.01)*

(52) Cooperative Patent Classification (CPC):
(C-Sets available)
**H01M 10/052; H01M 10/0565;** H01M 2300/0082
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **GOSWAMI, Mithun**
  **4021 Linz (AT)**
- **NIEDERSUESS, Peter**
  **4021 Linz (AT)**
- **YALALOV, Denis**
  **444 86 Stenungsund (SE)**
- **SURESH BABU, Suhas Donthy**
  **1020 Vienna (AT)**

(74) Representative: **Maikowski & Ninnemann Patentanwälte Partnerschaft mbB**
**Postfach 15 09 20**
**10671 Berlin (DE)**

## (54) A SOLID-STATE POLYMER ELECTROLYTE COMPOSITION FOR USE IN AN ELECTROCHEMICAL CELL

(57) The present invention relates to a solid-state polymer electrolyte composition comprising an ethylene copolymer containing at least 20 wt% (based on the overall weight of the ethylene copolymer) of an oxygen containing comonomer, and at least one Lithium salt.

EP 4 756 958 A1

(52) Cooperative Patent Classification (CPC): (Cont.)

C-Sets
**H01M 10/0565, C08L 23/0853**

## Description

The present invention relates to a solid-state polymer electrolyte composition and heir use in an electrochemical cell, in particular in a battery.

## Description

Rechargeable batteries based on metal anodes, such as lithium, sodium and zinc, can achieve high energy density. Typically, current batteries use liquid electrolytes that can react with the material of the metal anodes creating harsh operation conditions. This can result in limited performance while increasing the risks of fire and explosion.

As the liquid electrolytes have low life span, less electro-chemical and thermal stability, low energy density and slow charging there is a need for a next-generation battery with higher energy density and safety.

One approach replaces liquid electrolytes by solid-state electrolytes, in particular solid-state electrolytes based on polymer electrolytes.

A polymer electrolyte is a polymer matrix capable of ion conduction. Generally, polymer electrolytes comprise a polymer which incorporates a highly polar motif capable of electron donation. The degree of crystallinity of a polymer electrolyte matrix impacts ion mobility and the transport rate. Amorphous regions promote greater percolation of charge in gel and plasticized polymer electrolytes. Crystal defects promote weaker chain-ion interactions (see Wikipedia "Polymer electrolytes").

Solid-state polymer electrolyte (also known as solid polymer electrolyte or solvent-free polymer electrolyte) arises from coordination of an inorganic salt to the polymer matrix. Application of a potential results in ion exchange through coordination, decoordination, and recoordination along the polymer. The performance of the electrochemical cell is influenced by the activity of the salt (see Wikipedia "Polymer electrolytes").

Different polymer solid electrolytes are known and described. For example, KR20240126395 (A) discusses a general aliphatic polymer with zwitter ionic structure to act as the main polymer matrix. Various types of lithium metal salts can act as source of lithium ion. US2024297354 (A1) proposes a multi-segmented polymer system with a soft segment and a hard segment.

Soft segment is comprised of an amine terminated polyethylene oxide and hard segment is comprised of aromatic amide polymer. US2024287229 (A1) discloses a plasticizer containing electrolyte. The main matrix consists of an elastomeric polymer in combination with plurality of plastic crystals dispersed in the matrix. US2024274873 (A1) discusses a polymer electrolyte made with a combination of PEO and PVdF.

L. Yue et. al. All solid-state polymer electrolytes for high-performance lithium-ion batteries, Energy Storage Materials 5 (2016) 139-164, describes various possible solid state polymer electrolytes, including PEO based, Polysiloxane based, Polycarbonate based and plastic crystal based. Y. Zhao et. al. Solid Polymer Electrolytes with High Conductivity and Transference Number of Li Ions for Li-Based Rechargeable Batteries, Advanced Science 8 (2021) 2003675, reviews a series of polymer-based electrolytes, including PEO, PAN, PEI, PPC, PMO etc.

However, the presently known solid state polymer electrolytes, like the most well-known polymer electrolyte is poly(ethylene oxide) (PEO), suffer from poor mechanical properties, are prone to oxidation and a low electro-chemical window of application. Other potential polymer electrolytes suffer from either complex processing condition or low electrochemical or thermal stability. Additionally, scaling up from lab scale to mass production of any known solid-state electrolyte (both polymer and inorganic) is a major issue, which also drives up the overall cost and complexity of the process. This is one of the primary reasons behind the lack of full commercialization of this technology.

Accordingly, there is a need for alternative solid-state electrolyte systems with better processibility and ease of scaling up.

The present invention provides such an alternative solid-state electrolyte as described in claim 1.

Accordingly, a solid-state polymer electrolyte composition is provided, wherein the composition comprises

- an ethylene copolymer containing at least 20 wt% (based on the overall weight of the ethylene copolymer) of an oxygen containing comonomer, and

- at least one lithium salt.

Thus, a solid-state polymer electrolyte composition is provided that is based on a polyolefine, specifically on an ethylene copolymer. The general applicability of a polyolefine as an electrolyte is a novel concept as polyolefines and its various comonomers are commonly known and widely used for their insulating properties. There are many polyolefine based products used in electrical insulation industry.

However, despite their insulating properties polyolefines can be used as electrolytes with favorable higher conductivity values by compounding a lithium salt (such as Lithium Perchlorate) with a polyolefiine (such as High Pressure

Polyethylene) containing a high polar comonomer contents (for example > 20 weight% of butyl acrylate or vinyl acetate as will be described below in further detail). Surprisingly, the polyolefine compounded with a Lithium salt shows almost 3 to 4 orders of magnitude enhancement in electrical conductance values compared to a polyolefin without lithium perchlorate.

Furthermore, the polyolefin based polymer electrolytes can provide better flexibility, light weight, and easy processibility.

In an embodiment, the solid-state polymer electrolyte composition comprises

- within the range of from 70 to 95 wt% (based on the overall weight of the composition), preferably from 75 to 90 wt%, more preferably from 80 to 90 wt% of the ethylene copolymer, and
- within the range of from 5 to 30 wt% (based on the overall weight of the composition), preferably from 10 to 25 wt%, more preferably from 10 to 20 wt% of the at least one Lithium salt,

wherein the sum of all ingredients always adds up to 100 wt%.

In a preferred embodiment, the solid-state polymer electrolyte composition comprises

- within the range of from 75 to95 wt% (based on the overall weight of the composition) of the ethylene copolymer, and
- within the range of from 5 to 25 wt% (based on the overall weight of the composition) of the at least one Lithium salt,

wherein the sum of all ingredients always adds up to 100 wt%.

In an even more preferred embodiment, the solid-state polymer electrolyte composition comprises

- within the range of from 80 to 90 wt% (based on the overall weight of the composition) of the ethylene copolymer, and
- within the range of from 10 to 20 wt% (based on the overall weight of the composition) of the at least one Lithium salt,

wherein the sum of all ingredients always adds up to 100 wt%.

It is to be understood that the solid-state polymer electrolyte composition may contain further additives. However, it is preferred that no other additives are included except the ones which are present in the ethylene copolymer, such as dosing agent, pigments or dyes (for example carbon black), stabilizers (anti-oxidant agents), anti-acids and/or anti-UVs, antistatic agents, nucleating agents and utilization agents (such as processing aid agents). These additives are well known in the polymer industry and their use will be familiar to the skilled practitioner.

In a preferred embodiment of the solid-state polymer electrolyte composition, the ethylene copolymer contains at least 25 wt% and up to 50 wt% (based on the overall weight of the ethylene copolymer) of the oxygen containing comonomer. The oxygen containing comonomer may be present in the ethylene copolymer in an amount between 25 wt% and 45 wt%, preferably between 27 wt% and 40 wt% (based on the overall weight of the ethylene copolymer). The large polar comonomer content ensures better solvation of lithium ions in the polymer matrix. The generally amorphous nature of the polymers, in turn, helps in the diffusion of lithium ions. Both of these key features help in providing favorable electrical conductance values when compounded with a lithium salt such as lithium perchlorate.

The present solid-state polymer electrolyte composition has an electrical conductivity of at least $1.0 \times 10^{-11}$, preferably at least $1.0 \times 10^{-10}$ S/m (by measuring volume resistivity in Keithley 6517B electrometer at 5 Volt and then calculating electrical conductivity). The electrical conductivity of the present solid-state polymer electrolyte composition containing a Lithium salt is increased compared to the polymer composition without a Lithium salt.

The present solid-state polymer electrolyte composition has an ionic conductivity of at least 10 mS/cm, preferably at least 20 mS/cm, more preferably at least 30 mS/cm, even more preferably of at least 35 mS/cm at about 20°C (measured according to the method as described in the Experimental section). The ionic conductivity increases with temperature. Thus, the present solid-state polymer electrolyte composition has an ionic conductivity of at least 20 mS/cm, preferably at least 30 mS/cm, more preferably at least 40 mS/cm, even more preferably of at least 45 mS/cm at about 50°C (measured according to the method as described in the Experimental section)

<u>Oxygen containing comonomer</u>

In an embodiment of the solid-state polymer electrolyte composition, the at least one oxygen containing comonomer comprises a -COO- moiety and at least one double bond in 1,2-position to the -COO- moiety, such as in a acrylate comonomer or a vinyl acetate comonomer. Thus, the comonomer is characterized by an activated double bond.

In an embodiment of the solid-state polymer electrolyte composition, the at least one oxygen containing comonomer is selected from substituted or unsubstituted acrylate comonomers and/or vinyl acetate comonomers, as described by means of the following variants.

In one variant, the at least one oxygen containing comonomer has the general formulae (Ia)

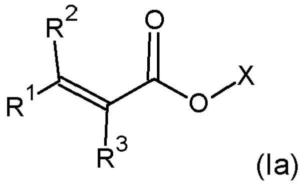

(Ia)

wherein $R^1$, $R^2$, $R^3$ each is independently selected from

hydrogen,
a C1- C12 alkyl moiety, preferably a C1-C8 alkyl moiety, more preferably a C1-C4 alkyl moiety, and
a C1- C12 alkoxy moiety, preferably a C1-C8 alkoxy moiety, more preferably a C1-C4 alkoxy moiety,

wherein, when appropriate, $R^1$, $R^2$, $R^3$ each is independently and optionally substituted with one or more functional groups selected from hydroxy, carboxy, carbonyl, and aldehyde,

wherein X is selected from
a C1- C12 alkyl moiety, preferably a C1-C8 alkyl moiety, more preferably a C1-C4 alkyl moiety,

wherein, when appropriate X is independently and optionally substituted with one or more functional groups selected from hydroxy, carboxy, carbonyl and aldehyde.

As used herein, the term "hydroxy" refers to -OH, the term "carboxy" refers to -COOH, the term "carbonyl" refers to -CO- and the term "aldehyde" refers to -CHO.

In an embodiment, the at least one oxygen containing comonomer has the general formulae (Ia), wherein $R^1$, $R^2$, $R^3$ each is independently selected from hydrogen, a C1-C8 alkyl moiety, a C1-C8 alkoxy moiety, wherein, when appropriate, $R^1$, $R^2$, $R^3$ each is independently and optionally substituted with one of hydroxy, carboxy, carbonyl, aldehyde, wherein X is selected from a C1-C8 alkyl moiety.

In another embodiment, the at least one oxygen containing comonomer has the general formulae (Ia), wherein $R^1$, $R^2$, $R^3$ each is independently selected from hydrogen, a C1-C4 alkyl moiety, a C1-C4 alkoxy moiety, wherein, when appropriate, $R^1$, $R^2$, $R^3$ each is independently and optionally substituted with one of hydroxy, carboxy, carbonyl, aldehyde, wherein X is selected from a C1-C4 alkyl moiety.

In a preferred embodiment, the at least one oxygen containing comonomer has the general formulae (Ia), wherein at least one or two of $R^1$, $R^2$, $R^3$ is hydrogen and the other of $R^1$, $R^2$, $R^3$ is a C1-C4 alkyl moiety and X is a substituted or non-substituted C1- C12 alkyl moiety, preferably a C1-C8 alkyl moiety, more preferably a C1-C4 alkyl moiety.

In a more preferred embodiment, the at least one oxygen containing comonomer has the general formulae (Ia), wherein $R^1$, $R^2$, $R^3$ are each hydrogen and X is a substituted or non-substituted C1- C12 alkyl moiety, preferably a C1-C8 alkyl moiety, more preferably a C1-C4 alkyl moiety.

In a most preferred embodiment, $R^1$, $R^2$, $R^3$ are each hydrogen and X is a C1-C4 alkyl moiety, such as methyl, ethyl, propyl, butyl, in particular butyl, such as butylacrylate.

In another, second variant, the at least one oxygen containing comonomer has the general formulae (Ib)

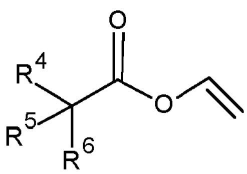

(Ib)

wherein $R^4$, $R^5$, $R^6$ each is independently selected from

hydrogen,
a C1- C12 alkyl moiety, preferably a C1-C8 alkyl moiety, more preferably a C1-C4 alkyl moiety, and
a C1- C12 alkoxy moiety, preferably a C1-C8 alkoxy moiety, more preferably a C1-C4 alkoxy moiety,

wherein, when appropriate $R^4$, $R^5$, $R^6$ each is independently and optionally substituted with one or more functional groups selected from -hydroxy, carboxy, carbonyl and aldehyde.

In an embodiment, the at least one oxygen containing comonomer has the general formulae (Ib), wherein $R^4$, $R^5$, $R^6$ each is independently selected from hydrogen, a C1-C8 alkyl moiety, a C1-C8 alkoxy moiety, wherein $R^4$, $R^5$, $R^6$ each is independently and optionally substituted with one or more of hydroxy, carboxy, carbonyl, aldehyde.

In a further embodiment, the at least one oxygen containing comonomer has the general formulae (Ib), wherein $R^4$, $R^5$, $R^6$ each is independently selected from hydrogen, a C1-C4 alkyl moiety, a C1-C4 alkoxy moiety, wherein $R^4$, $R^5$, $R^6$ each is independently and optionally substituted with one or more of hydroxy, carboxy, carbonyl, aldehyde.

In a preferred embodiment, the at least one oxygen containing comonomer has the general formulae (Ib), wherein at least one or two of $R^4$, $R^5$, $R^6$ is hydrogen and the remaining is / are a C1-C4 alkyl moiety.

In a preferred embodiment, the at least one oxygen containing comonomer has the general formulae (Ib), wherein all of $R^4$, $R^5$, $R^6$ are hydrogen, such a vinyl acetate.

Ethylene copolymer

The ethylene copolymer preferably used in the present solid-state electrolyte has a crystallinity (measured by DSC) within the range from 5 to 25%, preferably from 8 to 22 %, more preferably from 10 to 20%, such as from 10 to 15% or from 15 to 20%.

In a preferred embodiment of the present solid-state polymer electrolyte the ethylene copolymer is a high-pressure polyethylene (HPPE). HPPE is in particular well suited due to the presence of a sufficient amount of amorphous fractions facilitating Lithium-Ion transfer in combination with the polar comonomers.

The ethylene copolymer has a melt flow rate $MFR_2$ (190°C, 2.16 kg, measured according to ISO 1133-1:2022) of at least 2.0 g/10min, preferably of at least 3.0 g/ 10min, more preferably of at least 4.0 g/10 min, in particular in a range between 2.0 and 15.0 g/10 min, preferably between 2.5 and 10.0 g/10min, more preferably between 3.0 and 8.0 g/10 min. In one example the ethylene copolymer may have a melt flow rate between 2.5 and 4.0. In another example the ethylene copolymer may have a melt flow rate between 4.0 and 7.0 g/10 min.

In another embodiment, the ethylene copolymer has a melting temperature of at least 50°C, preferably of at least 55°C, more preferably of at least 60°C, such as in a range between 50°C and 100°C, preferably between 55°C and 95°C, more preferably between 60°C and 90°C.

Preferred ethylene copolymers are described now in more detail.

Ethylene copolymer (ECoP-1)

The at least one ethylene copolymer (ECoP-1) may have

- at least 20 wt%, preferably at least 24 wt%, more preferably at least 28 wt% of at least one oxygen containing comonomer of general formulae (Ib), wherein at least one or two of $R^4$, $R^5$, $R^6$ is hydrogen and the remaining is / are a C1-C4 alkyl moiety, preferably wherein all of $R^4$, $R^5$, $R^6$ is hydrogen, such a vinyl acetate;
- a melt flow rate $MFR_2$ (190°C, 2.16 kg, measured according to ISO 1133-1:2022) in the range between 3.0 and 20.0 g/10 min, preferably between 4.0 and 15.0 g/10min, more preferably between 5.0 and 10.0 g/10 min, even more preferably between 5.0 and 8.0 g/10 min, such as 6.0 g/10 min;
- a melting temperature in a range between 60°C and 90°C, preferably between 65°C and 85°C, more preferably between 70°C and 80°C; and

a crystallinity (measured by DSC) between 10 and 25%, preferably between 12 and 22 %, more preferably between 15 and 20%, such as between 16 and 17% .

The Ethylene copolymer (ECoP-1)_ is known in the art and commercially available for example from Borealis AG.

Ethylene copolymer (ECoP-2)

The at least one ethylene copolymer (ECoP-2) may have

- at least 30 wt%, preferably at least 35 wt%, more preferably at least 40 wt% of at least one oxygen containing comonomer of general formulae (Ib), wherein at least one or two of $R^4$, $R^5$, $R^6$ is hydrogen and the remaining is / are a C1-C4 alkyl moiety, preferably wherein all of $R^4$, $R^5$, $R^6$ is hydrogen, such a vinyl acetate;
- a melt flow rate $MFR_2$ (190°C, 2.16 kg, measured according to ISO 1133-1:2022) in the range between 0.5 and 10 g/10 min, preferably between 1 and 8 g/10 min, more preferably between 1.5 and 6 g/10 min, such as between 2 and 4 g/10 min.
- a melting temperature in a range between 50°C and 80°C, preferably between 55°C and 70°C, more preferably between 55°C and 65°C; and

a crystallinity (measured by DSC) between 5 and 20%, preferably between 8 and 18 %, more preferably between 10 and 15 %.

The Ethylene copolymer (ECoP-2) is known in the art and commercially available for example from LANXESS.

Ethylene copolymer (ECoP-3)

The at least one ethylene copolymer (ECoP-3) may have

- at least 20 wt%, preferably at least 24 wt%, more preferably at least 27 wt% of at least one oxygen containing comonomer of the general formulae (Ia), wherein at least one or two of $R^1$, $R^2$, $R^3$ is hydrogen and the other of $R^1$, $R^2$, $R^3$ is a C1-C4 alkyl moiety, preferably wherein $R^1$, $R^2$, $R^3$ are each hydrogen and X is a substituted or non-substituted C1- C12 alkyl moiety, preferably a C1-C8 alkyl moiety, more preferably a C1-C4 alkyl moiety, such as methyl, ethyl, propyl, butyl, in particular butyl, for example as butylacrylate;
- a melt flow rate $MFR_2$ (190C, 2.16 kg, measured according to ISO 1133-1:2022) in the range between 1.0 and 10.0 g/10 min, preferably between 1.0 and 8.0 g/10 min, more preferably between 2.0 and 6.0 g/10 min, such as between 3.5 and 5.5 g/10 min.
- a melting temperature in a range between 70°C and 100°C, preferably between 75°C and 95°C, more preferably between 80°C and 90°C; and
- a crystallinity (measured by DSC) between 10 and 25%, preferably between 12 and 22 %, more preferably between 15 and 20%, such as between 16 and 18% .

The Ethylene copolymer (ECoP-3) is known in the art and commercially available for example from Borealis AG.

In a preferred embodiment, the solid-state polymer electrolyte composition comprises

- 75- 95 wt% (based on the overall weight of the composition) of one of the ethylene copolymers (ECoP-1), (ECoP-2) or (ECoP-3), and
- 5- 25 wt% (based on the overall weight of the composition) of the at least one Lithium salt,

wherein the sum of all ingredients always adds up to 100 wt%.

In one embodiment, mixtures of at least two of the ethylene copolymers (ECoP-1), (ECoP-2), (ECoP-3) may be used as copolymers.

In an even more preferred embodiment, the solid-state polymer electrolyte composition comprises

- 80 - 90 wt% (based on the overall weight of the composition) of one of the ethylene copolymers (ECoP-1), (ECoP-2) or (ECoP-3), and
- 10- 20 wt% (based on the overall weight of the composition) of the at least one Lithium salt,

wherein the sum of all ingredients always adds up to 100 wt%.

Lithium salt

The at least one lithium salt is selected from a group comprising Lithium perchlorate ($LiClO_4$), Lithium bis(trifluoromethanesulfonyl)imide (LiTFSI), Lithium trifluoromethanesulfonate ($LiCF_3SO_3$), Lithium hexafluoroarsenate ($LiAsF_6$), Lithium hexafluorophosphate ($LiPF_6$) and Lithium bis(fluorosulfonyl)amide (LiFSI).

The most preferred lithium salts are Lithium perchlorate ($LiClO_4$), Lithium bis(trifluoromethanesulfonyl)imide (LiTFSI), Lithium trifluoromethanesulfonate ($LiCF_3SO_3$).

It is appreciated that the present invention also refers to a process for obtaining the solid state polymer electrolyte composition. The process comprises the steps of:

- providing the ethylene copolymer containing at least 20 wt% (based on the overall weight of the polyethylene copolymer) of an oxygen containing comonomer, and the at least one Lithium salt;
- feeding /dosing the ethylene copolymer containing at least 20 wt% (based on the overall weight of the polyethylene copolymer) of an oxygen containing comonomer, and the at least one Lithium salt separately or simultaneously into at least one extruder, thereby providing a mixture of the ethylene copolymer and the at least one lithium salt in the extruder
- melting the mixture in the at least one extruder, thereby providing the solid-state polymer electrolyte composition and
- optionally pelletizing the obtained solid-state polymer electrolyte composition.

For the purposes of the present invention, any suitable melting and mixing means known in the art may be used for carrying out the mixing and melting.

However, the melting and mixing step preferably takes place in a mixer and/or blender, high or low shear mixer, high-speed blender, or a twin-screw extruder. Most preferably, the melting and mixing step takes place in a twin-screw extruder such as a co-rotating twin-screw extruder. Such twin-screw extruders are well known in the art and the skilled person will adapt the melting and mixing conditions (such as melting temperature, screw speed and the like) according to the process equipment. It is appreciated that the extruder temperature is between 150 °C and 200 °C, preferably between 160° and 180°C.

The solid-state polymer electrolyte composition according to the invention can be used as electrolyte in an electrochemical cell, in particular a battery.

Experimental Section

The following Examples are included to demonstrate certain aspects and embodiments of the invention as described in the claims. It should be appreciated by those of skill in the art, however, that the following description is illustrative only and should not be taken in any way as a restriction of the invention.

Test Methods

The following definitions of terms and determination methods apply for the above general description of the invention as well as to the below examples unless otherwise defined.

**Melt Flow Rate**

The melt flow rate (MFR) is determined according to ISO 1133-1 :2022 and is indicated in g/10 min. The MFR is an indication of the flowability, and hence the processability, of the polymer. The higher the melt flow rate, the lower the viscosity of the polymer. The $MFR_2$ of polyethylene is determined at a temperature of 190 °C and a load of 2.16 kg.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 / YEAR 2018 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

**Electrical testing**

Electrical conductivity

The volume resistivity was measured by means of a electrometer from Keithley model 6517B connected to a volume resistivity cell from HP (former Keysight) model 16008B with adjustable contact pressure and guard electrode.

The test specimen was mounted in the test cell with a contact pressure indicating 5 kg. A voltage of 5 V was applied over the test sample and the electrometer was recording the electrical current flowing through the sample. The voltage was applied during 60 s test time and the current to determine the volume resistivity was taken at the end of the test time. The volume resistivity was calculated as

$$\rho = \frac{U}{I} \cdot \frac{A}{t}\ \Omega m$$

*U = Voltage*
*I = Current*
*A = Area of electrode*
*t = Samples thickness*

The electrical conductivity was calculated based on the volume resistivity according to the following formula:

$$electrical\ conductivity = \frac{1}{volume\ resistivity}$$

Ionic conductivity

The total ionic conductivity was measured by sandwiching sample between stainless steel electrodes and performing impedance spectroscopy as well as linear sweep voltammetry.

Upon received, the polymer electrolyte films were stored in a silica filled desiccator prior to use to avoid the uptake of moisture. Disks with a diameter of 19.5 mm were cut out from the respective films and placed between two stainless steel electrode plates with a 50 μm polytetrafluoroethylene gasket (PTFE). These were placed in a sample holder and heated to 70 °C during 4 hours to improve the contact between the polymer electrolyte and the electrode plates. The sample holder was subsequently connected in a four-probe setup to a Gamry 3000 Reference Potentiostat/Galvanostat/ZRA controlled by a Greenlight Innovation G20 system.

Linear sweep voltammetry (LSV) was performed between -50 and 50 mV with a scan rate of 10 mV/s and recording the voltage as a function of current 5 times per second.

Potentiostatic electrochemical impedance spectroscopy (PEIS) was performed between 100 kHz and 10 mHz at 0 VDC and 10 mV root-mean-squared amplitude.

From the slope of each plot, the inverse of the area specific resistance (1 / [R A]) could be obtained. The conductivity was calculated as:

$$Conductivity = thickness\ /\ area\ specific\ resistance$$

Different ethylene copolymers were used characterized by the following properties:

Ethylene copolymer (ECoP-1)

Ethylene copolymer (ECoP-1) is a copolymer of ethylene and vinyl acetate containing 28 wt% vinyl acetate.

It has a $MFR_2$ (190°C, 2.16 kg, measured according to ISO 1133-1:2022) of 6.0 g/10 min; a melting temperature of 71°C, a crystallinity of 16-17%.

Ethylene copolymer (ECoP-2)

Ethylene copolymer (ECoP-2) is a copolymer of ethylene and vinyl acetate containing 40 wt% vinyl acetate.

It has a $MFR_2$ (190°C, 2.16 kg, measured according to ISO 1133-1:2022) of 2.95 g/10 min; a melting temperature of 60°C, a crystallinity of 10-15%.

Ethylene copolymer (ECoP-3)

Ethylene copolymer (ECoP-3) is a copolymer of ethylene and butyl acrylate containing 27 wt% butyl acrylate.

It has a $MFR_2$ (190°C, 2.16 kg, measured according to ISO 1133-1:2022) of 4.6 g/10 min; a melting temperature of 87°C, a crystallinity of 16-18%.

The ethylene copolymers (ECoP 1-3) were mixed with Lithium Perchlorate to obtain polymer electrolyte compositions (see Table 1). The compounds of polyolefin with lithium perchlorate were developed externally at TCKT (Transfercenter für Kunstofftechnik GmbH) using Prism TSE 24MC extruder at a bulk temperature of around 170°C, and at average screw speed of 300 rpm.

Table 1. Compounding details including the dosing amounts to prepare the compounds

| Compounding Details | ECoP-2 | ECoP-3 | ECoP-1 |
|---|---|---|---|
| Dosing of polymer (%) | 90.0 | 80.0 | 90.0 |
| Dosing of Lithium Perchlorate (%) | 10.0 | 20.0 | 10.0 |
| Temperature (°C) | 172 | 172 | 171 |

These compounds were subsequently compression molded to plaques of 10 cm × 10 cm dimension and around 100 μm to 200 μm thickness.

Electrical conductivity

Next, these PO plaques containing lithium perchlorate and plaques from pure polymers were tested for volume resistivity and the electrical conductivity was calculated according to the following formula: $electrical\ conductivity = \frac{1}{volume\ resistivity}$. The conductivity values between the compounds and the pure polymers are listed in Table 2.

Table 2. Comparison of electrical conductivity values between compounds and pure polymers.

| Materials | Average electrical conductivity (Siemens/ m) |
|---|---|
| ECoP-3 + 20 wt% Lithium perchlorate | $1.5 \times 10^{-11}$ |
| ECoP-1 + 10 wt% Lithium perchlorate | $2.5 \times 10^{-11}$ |
| ECoP-2 + 10 wt% Lithium perchlorate | $1.9 \times 10^{-10}$ |
| ECoP-3 | $3.3 \times 10^{-14}$ |
| ECoP-1 | $1.3 \times 10^{-13}$ |
| ECoP-2 | $8.5 \times 10^{-14}$ |

The electrical conductivity values shown in Table 2 clearly proves that compounding the polymers with lithium perchlorate significantly improves the conductivity.

Ionic conductivity

The following two samples were measured:

- ECoP-2 (10% LiClO4) with an average thickness of 19.5 mm disk / μm of 50;
- ECoP-3 (20% LiClO4) with an average thickness of 19.5 mm disk / μm of 73.8.

The thickness of the polymer electrolyte films was measured before and after the measurements.

Linear sweep voltammetry (LSV) was performed on the polymer electrolyte disks between -50 and 50 mV. Within this voltage range, the current response was completely linear indicating a pure ohmic behaviour (plots are not shown).

The conductivity values are presented in Table 3. The measured values are very high compared to other state-of-the-art reported values, which are typically between 1 and 6 mS $cm^{-1}$ (Li, Z. et al. Tailoring polymer electrolyte ionic conductivity for production of low-temperature operating quasi-all-solid-state lithium metal batteries. Nat. Commun. 14, 482, 2023; Yang, H. & Wu, N. Ionic conductivity and ion transport mechanisms of solid-state lithium-ion battery electrolytes: A review. Energy Sci. Eng. 10, 1643-1671, 2022).

Table 3: Area Specific Resistance and Total Conductivity obtained from LSV slopes

| | Area Specific Resistance [mΩ cm2] | | Conductivity [mS/cm] | |
|---|---|---|---|---|
| Temperature [°C] | ECoP-2 + 10 wt% $LiClO_4$ | ECoP-3 + 20 wt% $LiClO_4$ | ECoP-2 + 10 wt% $LiClO_4$ | ECoP-3 + 20 wt% $LiClO_4$ |
| 20 | 138 | 155 | 36 | 48 |
| 30 | 132 | 142 | 37 | 52 |
| 40 | 124 | 108 | 39 | 68 |
| 50 | 104 | 92 | 47 | 80 |
| 60 | 84 | 80 | 58 | 92 |

To corroborate the result PEIS was performed immediately after each LSV (Bode plots are not shown). The magnitude of the complex impedance was largely frequency independent with minor changes due to the inductance of the wiring. Also the phase angles were approximately 0 ° (max values of approximately 7 ° at high frequency) indicating mainly ohmic behaviour. The resistances obtained from the frequency independent plateau values in the Bode plots are almost identical to those obtained from the slope in the LSV.

## Claims

1. A solid-state polymer electrolyte composition comprising

   - an ethylene copolymer containing at least 20 wt%, based on the overall weight of the ethylene copolymer, of an oxygen containing comonomer, and
   - at least one lithium salt.

2. Solid-state polymer electrolyte composition according to claim 1, comprising

   - within the range of from 70 to 95 wt%, based on the overall weight of the composition, preferably from 75 to 90 wt%, more preferably from 80 to 90 wt%, of the ethylene copolymer, and
   - within the range of from 5 to 30 wt%, based on the overall weight of the composition) preferably from 10 to 25 wt%, more preferably from 10 to 20 wt%, of the at least one lithium salt,

   wherein the sum of all ingredients always adds up to 100 wt%.

3. Solid-state polymer electrolyte composition according to one of the preceding claims, wherein the ethylene copolymer contains at least 25 wt% and up to 50 wt%, based on the overall weight of the ethylene copolymer, of the oxygen containing comonomer.

4. Solid-state polymer electrolyte composition according to one of the preceding claims, wherein the at least one oxygen containing comonomer comprises a -COO- moiety and at least one double bond in 1,2-position to the -COO- moiety, wherein the at least one oxygen containing commoner is selected from acrylate comonomers and vinyl acetate comonomers..

5. Solid-state polymer electrolyte composition according to one of the preceding claims,

   wherein the at least one oxygen containing comonomer is of the general formulae (Ia)

   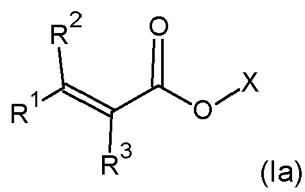

   (Ia)

   wherein $R^1$, $R^2$, $R^3$ each is independently selected from hydrogen,
   a C1- C12 alkyl moiety, preferably a C1-C8 alkyl moiety, more preferably a C1-C4 alkyl moiety, and
   a C1-C12 alkoxy moiety, preferably a C1-C8 alkoxy moiety, more preferably a C1-C4 alkoxy moiety,
   wherein $R^1$, $R^2$, $R^3$ each is independently and optionally substituted with one or more functional groups selected from hydroxy, carboxy, carbonyl, and aldehyde,

   wherein X is selected from

   a C1- C12 alkyl moiety, preferably a C1-C8 alkyl moiety, more preferably a C1-C4 alkyl moiety,
   wherein X is independently and optionally substituted with one or more functional groups selected from hydroxy, carboxy, carbonyl, and aldehyde, .

6. Solid-state polymer electrolyte composition according to claim 5, wherein $R^1$, $R^2$, $R^3$ are each hydrogen and X is a substituted or non-substituted C1-C12 alkyl moiety, preferably a C1-C8 alkyl moiety, more preferably a C1-C4 alkyl moiety.

7. Solid-state polymer electrolyte composition according to one of the claims 1-4, wherein the at least one oxygen containing comonomer is of the general formulae (Ib)

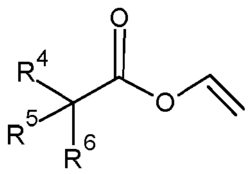

(Ib)

wherein $R^4$, $R^5$, $R^6$ each is independently selected from

hydrogen,
a C1- C12 alkyl moiety, preferably a C1-C8 alkyl moiety, more preferably a C1-C4 alkyl moiety, and
a C1-C12 alkoxy moiety, preferably a C1-C8 alkoxy moiety, more preferably a C1-C4 alkoxy moiety,
wherein $R^4$, $R^5$, $R^6$ each is independently and optionally substituted with one or more functional groups selected from hydroxy, carboxy, carbonyl, and aldehyde.

**8.** Solid-state polymer electrolyte composition according to claim 7, wherein $R^4$, $R^5$, $R^6$ are each hydrogen.

**9.** Solid-state polymer electrolyte composition according to one of the preceding claims, wherein the at least one lithium salt is selected from a group consisting of Lithium perchlorate ($LiClO_4$), Lithium bis(trifluoromethanesulfonyl)imide (LiTFSI), Lithium trifluoromethanesulfonate ($LiCF_3SO_3$), Lithium hexafluoroarsenate ($LiAsF_6$), Lithium hexafluorophosphate ($LiPF_6$) and Lithium bis(fluorosulfonyl)amide (LiFSI), preferably Lithium perchlorate ($LiClO_4$), Lithium bis(trifluoromethanesulfonyl)imide (LiTFSI), and Lithium trifluoromethanesulfonate ($LiCF_3SO_3$).

**10.** Solid-state polymer electrolyte composition according to one of the preceding claims, wherein the ethylene copolymer has a crystallinity, measured by DSC, within the range from 5 to 25%, preferably from 8 to 22 %, more preferably from 10 to 20%, such as from 10 to 15% or from 15 to 20%.

**11.** Solid-state polymer electrolyte composition according to one of the preceding claims, wherein the ethylene copolymer is a high pressure polyethylene (HPPE).

**12.** Solid-state polymer electrolyte composition according to one of the preceding claims, having an electrical conductivity of at least $1.0 \times 10^{-11}$, preferably at least $1.0 \times 10^{-10}$ S/m, determined by measuring volume resistivity in Keithley 6517B electrometer at 5 Volt and then calculating electrical conductivity, according to the following formula:

$$electrical\ conductivity = \frac{1}{volume\ resistivity}$$

**13.** Solid-state polymer electrolyte composition according to one of the preceding claims, having an ionic conductivity of at least 10 mS/cm, preferably at least 20 mS/cm, more preferably at least 30 mS/cm, even more preferably of at least 35 mS/cm at about 20°C (measured according to the method as described in the Experimental section).

**14.** Use of a solid-state polymer electrolyte composition according to one of the preceding claims as electrolyte in an electrochemical cell, in particular a battery.

**15.** Process for obtaining the solid-state polymer electrolyte composition according to one of the preceding claims, comprising the steps of

- providing the ethylene copolymer containing at least 20 wt%, based on the overall weight of the polyethylene copolymer, of an oxygen containing comonomer, and the at least one lithium salt;
- feeding the ethylene copolymer containing at least 20 wt%, based on the overall weight of the polyethylene copolymer, of an oxygen containing comonomer, and the at least one lithium salt separately or simultaneously into at least one extruder, thereby providing a mixture of the ethylene copolymer and the at least one lithium salt in the extruder;
- melting the mixture in the at least one extruder; thereby providing the solid-state polymer electrolyte composition and
- optionally pelletizing the obtained composition.

Europäisches Patentamt
European Patent Office
Office européen des brevets

# EUROPEAN SEARCH REPORT

Application Number
EP 24 21 8398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 744 293 A (UNIV HARBIN SCIENCE & TECH) 12 July 2022 (2022-07-12)<br>* paragraphs [0010], [0011], [0023] *<br>----- | 1-4,7-15 | INV.<br>H01M10/052<br>H01M10/0565 |
| X | CN 117 327 460 A (SICHUAN NEW ENERGY AUTOMOBILE INNOVATION CENTER CO LTD)<br>2 January 2024 (2024-01-02)<br>* paragraph [0042]; examples 3,6 *<br>----- | 1-6,9-15 | |
| X | CN 103 647 107 A (DONGFANG ELECTRIC CORP)<br>19 March 2014 (2014-03-19)<br>* examples 1-6; table 1 *<br>----- | 1-4,7-15 | |
| X | XINGLAN HUANG ET AL: "Preparation, characterization, conductivity studies of novel solid polymer electrolytes based on blend of poly (AN--VEC) and EVA",<br>SOLID STATE IONICS, NORTH HOLLAND PUB. COMPANY. AMSTERDAM; NL, NL,<br>vol. 215, 7 March 2012 (2012-03-07), pages 7-15, XP028483515,<br>ISSN: 0167-2738, DOI: 10.1016/J.SSI.2012.03.009<br>[retrieved on 2012-03-14]<br>* "2. Experiment" section on pages 8 and 9;<br>examples SR2-SR6; table 1 *<br>----- | 1-4,7-15 | TECHNICAL FIELDS SEARCHED (IPC)<br>H01M |
| X | CN 116 387 606 A (SICHUAN NEW ENERGY VEHICLE INNOVATION CENTER CO LTD)<br>4 July 2023 (2023-07-04)<br>* examples 1-5 *<br>----- | 1-6,10,<br>12-14 | |

The present search report has been drawn up for all claims

2

| Place of search | Date of completion of the search | Examiner |
|---|---|---|
| The Hague | 10 April 2025 | Pelras, Théophile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 21 8398

This annex lists the patent family members relating to the patent documents cited in the above-mentioned European search report. The members are as contained in the European Patent Office EDP file on
The European Patent Office is in no way liable for these particulars which are merely given for the purpose of information.

10-04-2025

| Patent document cited in search report | Publication date | Patent family member(s) | Publication date |
|---|---|---|---|
| CN 114744293 A | 12-07-2022 | NONE | |
| CN 117327460 A | 02-01-2024 | NONE | |
| CN 103647107 A | 19-03-2014 | NONE | |
| CN 116387606 A | 04-07-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20240126395 A
- US 2024297354 A
- US 2024287229 A
- US 2024274873 A


### Non-patent literature cited in the description


- **L. YUE**. All solid-state polymer electrolytes for high-performance lithium-ion batteries. *Energy Storage Materials*, 2016, vol. 5, 139-164
- **Y. ZHAO**. Solid Polymer Electrolytes with High Conductivity and Transference Number of Li Ions for Li-Based Rechargeable Batteries. *Advanced Science*, 2021, vol. 8, 2003675
- **LI, Z et al.** Tailoring polymer electrolyte ionic conductivity for production of low-temperature operating quasi-all-solid-state lithium metal batteries. *Nat. Commun*, 2023, vol. 14, 482
- **YANG, H.** ; **WU, N**. Ionic conductivity and ion transport mechanisms of solid-state lithium-ion battery electrolytes: A review. *Energy Sci. Eng.*, 2022, vol. 10, 1643-1671